# EUROPEAN PATENT APPLICATION

(11) **EP 2 778 867 A2**
(43) Date of publication of application: **17.09.2014**
(21) Application number: 14159479.6
(22) Date of filing: 13.03.2014
(51) Int. Cl.: G06F 3/041, G06F 3/044

(54) **Method and apparatus for operating touch screen**

(30) Priority: 13.03.2013 US 201361779349 P; 20.06.2013 KR 20130070989; 04.09.2013 US 201361873462 P; 17.10.2013 KR 20130123746
(71) Applicant: Samsung Electronics Co., Ltd., Suwon-si Gyeonggi-do 443-742 (KR)
(72) Inventor: Chung, Seungmin, 443-742 Gyeonggi-do (KR); Kim, Kiwon, 443-742 Gyeonggi-do (KR); Lee, Bumwoo, 443-742 Gyeonggi-do (KR); Lim, Dahee, 443-742 Gyeonggi-do (KR)
(74) Representative: Nederlandsch Octrooibureau

(57) **Abstract**

A method is provided for operating an electronic device including a touch screen panel, the method comprising: recognizing an indirect touch based on detection information detected through the touch screen panel; and setting a touch sensitivity of the touch screen panel corresponding to the indirect.

## Description

### TECHNICAL FIELD

The present disclosure relates to electronic devices, and more particularly to a method and apparatus for operating a touch screen.

### BACKGROUND

In recent years, various electronic devices include a touch screen as a user interface. For instance, the touch screen may be implemented by a resistive overlay type, a capacitive overlay type, an infrared beam type, or a surface acoustic wave type.

Electronic devices equipped with a touch screen panel of capacitive overlay type may generate a touch event as a conductive object is directly in contact with the touch screen or the conductive object approaches within a selected distance from the touch screen. For instance, the conductive object may include a finger of a person, a stylus pen, or a glove including a conductive material at an end of the finger.

### SUMMARY

According to one aspect of the disclosure, a method is provided for operating an electronic device including a touch screen panel, the method comprising: recognizing an indirect touch based on detection information detected through the touch screen panel; and setting a touch sensitivity of the touch screen panel corresponding to the indirect touch.

According to another aspect of the disclosure, an electronic device is provided comprising: a touch screen panel configured to generate detection information in response to a touch on a touch screen; a processor; a touch screen controller configured to generate a touch event based on the detection information and to transfer the generated touch event to the processor; and a touch management module configured to perform an operation of recognizing an indirect touch based on the detection information detected through the touch screen panel, and an operation of setting a touch sensitivity of the touch screen panel to a value corresponding to the indirect touch.

According to yet another aspect of the disclosure an electronic device is provided comprising: a touch input unit configured to generate an electrical signal in response to touch or proximity of an at least partially electrically conductive external object; and a processor configured to determine that the touch or the proximity is valid when the electrical signal exceeds a first threshold value or when the electrical signal is equal to or greater than the first threshold value, wherein the processor is configure to monitor the electrical signal based at least partly on a second threshold value different from the first threshold value.

According to yet another aspect of the disclosure, method is provided comprising: generating an electrical signal in response to touch or proximity of an at least partially electrically conductive external object to a touch input unit; determining that the touch or the proximity is valid when the electrical signal exceeds a first threshold value or when the electrical signal is equal to or greater than the first threshold value; and monitoring the electrical signal based at least partly on a second threshold value different from the first threshold value.

### BRIEF DESCRIPTION OF THE DRAWINGS

The above features and advantages of the present disclosure will be more apparent from the following detailed description in conjunction with the accompanying drawings, in which:
FIG. 1 is a block diagram of an example of an electronic device according to an aspect of the present disclosure;
FIGS. 2A and 2B are diagrams illustrating an example of an electronic device and the cover of the electronic device according to an aspect of the present disclosure;
FIGS. 3A and 3B are diagrams illustrating an example of an open state of the cover and a closed state of the cover in a state in which the cover is coupled with the electronic device according to an aspect of the present disclosure;
FIGS. 4A and 4B are diagrams illustrating an example of an active region of a touch screen panel corresponding to a view area of the cover according to an aspect of the present disclosure;
FIG. 5A is a diagram illustrating an example of case where a finger touches a touch screen of the electronic device according to an aspect of the present disclosure;
FIGS. 5B and 5C are diagrams illustrating an example of a case where a finger in glove touches the touch screen of the electronic device according to an aspect of the present disclosure;
FIG. 5D is a diagram illustrating an example of a case where a finger touches the cover in a state in which the cover closes the touch screen of the electronic device according to an aspect of the present disclosure;
FIG. 5E is a diagram illustrating an example of a case where a finger in glove touches the cover in a state in which the cover closes the touch screen of the electronic device according to an aspect of the present disclosure;
FIG. 5F is a diagram illustrating an example of a case where a finger hovers the touch screen of the electronic device according to an aspect of the present disclosure;
FIG. 6 is a flowchart of an example of a process according to aspects of the disclosure;
FIG. 7 a flowchart of another example of a process according to aspects of the disclosure;
FIG. 8 is a flowchart a flowchart of yet another example of a process according to aspects of the disclosure;
FIG. 9 is a flowchart a flowchart of yet another example of a process according to aspects of the disclosure;
FIG. 10 is a flowchart a flowchart of yet another example of a process according to aspects of the disclosure;
FIG. 11 is a flowchart a flowchart of yet another example of a process according to aspects of the disclosure;
FIG. 12 is a diagram illustrating an example of process performed by the electronic device 100, in accordance with aspects of the disclosure; and
FIG. 13 is a diagram illustrating an example of a procedure for changing operation modes of the touch screen and the touch key in the electronic device according to an aspect of the present disclosure.

### DETAILED DESCRIPTION

A touch input of the present disclosure may include a direct touch input and an indirect touch input.

In the specification, the term "direct touch input" may refer to an input in which a conductive object (e.g., finger or stylus pen) is directly in contact with a touch screen. According to an aspect disclosed in the specification, the term "indirect touch input" may refer to an input in which a conductive object surrounded by a non-conductive object (e.g., a finger in glove) approaches a touch screen or the non-conductive object (e.g., glove in which the finger is inserted) is in contact with the touch screen. In another aspect, the term "indirect touch input" may refer to an input in which a finger is in contact with a non-conductive object (e.g., the cover for protecting a touch screen) in a state in which the non-conductive object is situated on (and/or forms contact with) a surface of the touch screen. In another aspect, the term "indirect touch input" may refer to a hovering input in which a finger approaches a touchscreen panel within a given distance without actually touching the touchscreen panel.

The meaning of the term "indirect touch input" is not limited to the above examples, but may include various other aspects, which may generally mean a method to generate a selected event when the conductive object is not directly in contact with the touch screen but is located within a selected distance from the touch screen. In the specification, "indirect touch" may mean that the conductive object is "proximate" to the touch screen. When a finger in glove touches the touch screen, this type of "indirect touch" may be referred to as a "glove touch".

In some aspects, the term "conductive object" may refer to an object which is an electric conductor, for example, metal or a human body. Although conductivity of the conductive object is not so high (like a conductive material such as copper, and the like), the conductivity of the conductive object is considered to be sufficient if the conductivity of the conductive object is able to generate a touch event by varying a signal generated from the touch screen.

An electronic device according to various aspects of the present disclosure may include a touch screen panel of capacitive overlay type as a touch input unit. The touch screen panel may be configured to generate an electrical signal in response to a touch or proximity of an external conductive object. For instance, the electronic device may include a smart phone, a tablet PC, a notebook PC, a digital camera, a smart TV, a Personal Digital Assistant (PDA), an electronic scheduler, a desktop PC, a Portable Multimedia Player (PMP), a Media Player (e.g., MP3 player), a sound device, a smart watch, a game terminal, or a home appliance (e.g., refrigerator, TV, washing machine, and the like) including a touch screen.

The electronic device according to various aspects of the present disclosure may recognize a touch input, and set touch sensitivity of the touch screen corresponding to the recognized touch input.

The electronic device according to various aspects of the present disclosure may recognize a user touch as a direct touch or an indirect touch. When the user touch is recognized as a direct touch, the electronic device may set touch sensitivity of its touchscreen to a first touch sensitivity value (or "direct touch sensitivity") corresponding to the direct touch. When the user touch is recognized as an indirect touch, the electronic device may set a touch sensitivity of its touchscreen to a second touch sensitivity value (or "indirect touch sensitivity") corresponding an indirect touch.

In some implementations, setting the touch sensitivity of the touch screen may include setting a threshold value used in detecting the occurrence of touch input. In some implementations, when a signal exceeding (or equal to or greater than) the threshold value occurs on the touch screen, the electronic device recognizes that the touch is occurred. When a signal equal to or less than (or below) the threshold value occurs on the touch screen, the electronic device may disregard the touch.

However, according to various aspects of the present disclosure, if an amount of capacitance variation (e.g., 30-50 µF of capacitance less than a first preset value) is detected for a preset time (e.g., 100 ms) in a state in which the threshold value is set to a first preset value (direct touch value), for example, 50 µF, the electronic device may recognize the user touch as indirect touch to change the threshold value to a second preset value (or indirect touch value) (e.g., 20 µF). It will be clear to those skilled in the art that the threshold values used in various examples of the present disclosure are provided as examples only. The disclosure is not limited to any specific threshold value.

Accordingly, if the amount of capacitance variation equal to or greater than a second preset value is detected, the electronic device may determine the detected variation amount as a valid value and generate a touch event according to the determination, and execute a function corresponding to the touch event.

According to another aspect, if a variation amount (e.g., 60 µF or greater (or exceeding 60 µF)) of capacitance greater than a first preset value is detected for a preset time (e.g., 100 ms) in a state in which the threshold value is set to a second preset value, the electronic device may recognize the user touch as direct touch to change the threshold value to a first preset value. Accordingly, if the amount of capacitance variation equal to or greater than the first preset value is detected, the electronic device may determine the detected variation amount as a valid value and may generate a touch event according to the determination (i.e. does not generate a touch event when the amount of capacitance variation is equal to or less than the first preset value), and execute a function corresponding to the touch event.

As another example, if frames having a variation amount (e.g., 25∼50µF) of capacitance lower than a first preset value (e.g., 50 µF) in a display region having a preset size (e.g., 10×10 pixel) is continuously detected by the preset number (e.g., 8 frames) (or when a detection frequency exceeds the preset number) in a state in which a threshold value is set to the first preset value, the electronic device recognizes the user touch as indirect touch to change or set the threshold value to the second preset value (e.g., 20 µF).

If frames (e.g., 8 frames) having a variation amount (e.g., equal to or greater than 60µF, or exceeding 60µF) of capacitance higher than the first preset value in a state in which the threshold value is set to the second preset value is continuously detected, the electronic device recognizes the user touch as direct touch to set the threshold value to the first preset value. The frame may be a unit of detection information (including amount of capacitance variation) that the touch screen panel generates per time. For instance, the touch screen panel may generate 30 frames per one second and transfer to a touch screen controller.

As described above, for instance, parameter information used to set an operation mode may include at least one of a time, the number of frames, or a region, but it is not limited thereto.

In another aspect of the present disclosure, the parameter information may include a touch location. For instance, the cover on which a view area is formed may be mounted on the electronic device. The view area may be configured with a transparent material (e.g., reinforcing glass, acryl, and the like). Accordingly, when the cover is stacked on the touch screen (i.e., when the cover closes the touch screen), the user may view the touch screen through a view area.

In the aspect of the present disclosure, when an amount of capacitance variation lower than the first preset value is detected at a touch location corresponding to the view area for a preset time in a state in which the threshold value is set to the first preset value, the electronic device may recognize the user touch as indirect touch to set or change the threshold value to the second preset value. When an amount of capacitance variation higher than the first preset value is detected (regardless of a touch location) for a preset time in a state in which the threshold value is set to the second preset value, the electronic device may recognize the user touch as direct touch to set or change the threshold value to the first preset value.

Further, the parameter information may include detection information indicating an open of the cover. For instance, the electronic device may include a sensor, for example, a Hall Effect sensor to detect open or close of the cover. Accordingly, a magnet may be mounted on the cover. If the Hall sensor detects the close of the cover, the electronic device may set the operation mode of the touch screen as an indirect touch mode. If the Hall sensor detects the open of the cover, the electronic device may set the operation mode as a direct touch mode.

An electronic device according to another aspect of the present disclosure may include a touch key of capacitive overlay type as a touch input unit. The touch key may be configured to generate an electrical signal in response to touch or proximate of an external conductive object. Further, the touch key may be installed close to a screen of the touch screen. The electronic device according to the aspect of the present disclosure may set the operation mode of the touch key corresponding to the operation mode of the touch screen. For instance, when the operation mode of the touch screen is set as the direct touch mode, the operation mode of the touch key may also be set as the direct touch mode. When the operation mode of the touch screen is set as the indirect touch mode, the operation mode of the touch key may also be set as the indirect touch mode.

An electronic device according to another aspect of the present disclosure may recognize user hovering as direct hovering or indirect hovering. In specification, for example, the "direct hovering" means an operation that a finger hovers on the touch screen. The "indirect hovering" may mean an operation that the finger in the glove hovers on the touch screen while a glove does not touch the touch screen in a state in which the user puts on the glove.

When the user hovering is recognized as direct hovering, the electronic device may set a hovering sensitivity as a first hovering sensitivity (or direct hovering sensitivity) corresponding to the direct hovering. When the user hovering is recognized as indirect hovering, the electronic device may set the hovering sensitivity as a second hovering sensitivity (or indirect hovering sensitivity) corresponding to the indirect hovering.

When the user hovering occurs on a touch input unit (e.g., touch screen panel, touch key, and the like) in a state in which the user puts on the glove, the amount of capacitance variation may be lower than a currently set direct hovering value. Further, the preset number (e.g., 8 frames) (or, 8 frames or more) of frames having an amount of capacitance variation lower than the direct hovering value may be continuously detected. Then, the electronic device may recognize the user hovering as the indirect hovering to change the threshold value to the indirect hovering value lower than the direct hovering value. Accordingly, when the amount of capacitance variation equal to or greater than the indirect hovering value is detected, the electronic device determines the detected variation amount of the capacitance as a valid value, generates a hovering event according to the determination, and may execute a function corresponding to the hovering event.

If the amount of capacitance variation higher than the indirect hovering value is detected for a predetermined time (e.g., 100 ms) in a state in which the threshold value is set to the indirect hovering value, the electronic device may recognize the user hovering as direct hovering to set the threshold vale to the direct hovering value. If frames having the amount of capacitance variation higher than the indirect hovering value is continuously detected as much as the preset number (e.g., 8 frames) (or when the detection frequency exceeds the preset number) in a state in which the threshold value is set to the indirect hovering value, the electronic device may recognize the user hovering as direct hovering to set the threshold value to the direct hovering value. Accordingly, if the amount of capacitance variation equal to or greater than the direct hovering value, the electronic device determines the detected variation amount as a valid value, generates a hovering event according to the determination, and may execute a function corresponding to the hovering event.

Aspects of the present disclosure are described with reference to the accompanying drawings in detail. The same reference numbers are used throughout the drawings to refer to the same or like parts. Detailed descriptions of well-known functions and structures incorporated herein may be omitted to avoid obscuring the subject matter of the present disclosure.

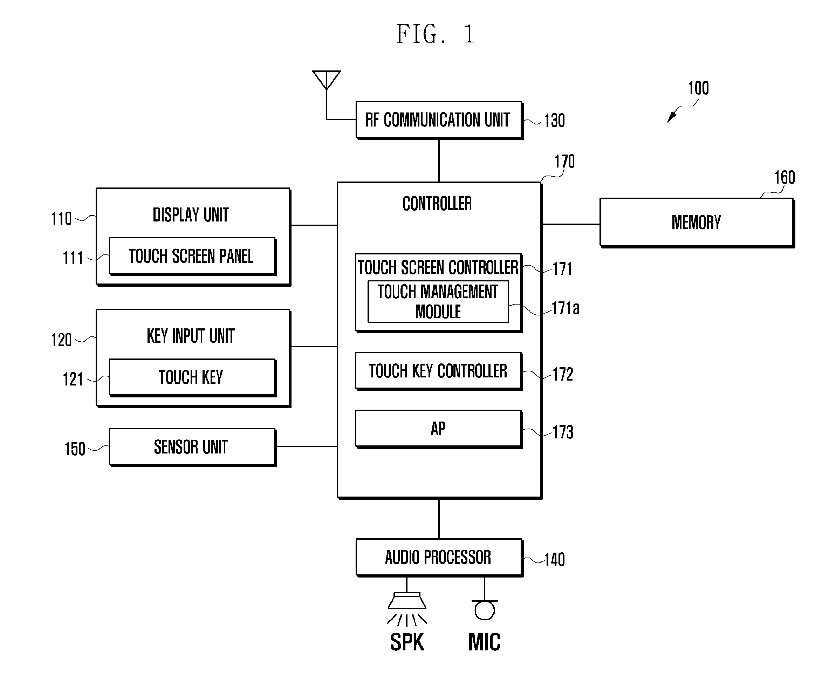

FIG. 1 is a block diagram illustrating a configuration of an electronic device according to an aspect of the present disclosure. Referring to FIG. 1, the electronic device 100 may include a display unit 110, a key input unit 120, a radio frequency (RF) communication unit 130, an audio processor 140, a speaker SPK, a microphone MIC, a sensor unit 150, a memory 160, and a controller 170.

The display unit 110 may display various information on a screen under control of the controller 170, particularly, an application processor (AP). For instance, if the controller 170 processes (e.g., decodes) information to store the processed information in the memory 160 (e.g., frame buffer), the display unit 110 may convert data stored in the frame buffer into an analog signal to display the analog signal on a screen. The display unit 110 may include a Liquid Crystal Display (LCD), an Active Matrix Organic Light Emitted Diode (AMOLED), and a Flexible display or a transparent display.

If power is supplied to the display unit 110, the display unit 140 may display a lock image on the screen. If a user input (e.g., password) to release lock is detected in a state in which the lock image is displayed, the controller 170 may release lock. When the lock is released, the display unit 110 may display a home image instead of the lock image on the screen under control of the controller 170. The home image may include a background and icons displayed on the background. The icon may indicate an application or contents (e.g., photograph files, video files, record files, documents, messages, and the like). If the user input to execute an application icon is detected, the controller 170 may execute a corresponding application, and control the display unit 110 to display an execution image on the screen.

The touch screen panel 111 may be installed on the screen of the display unit 110. For instance, the touch screen panel 111 may be configured with an add-on type which is located on the display unit 112 and an on-cell type or an in-cell type which is inserted in the display unit 112.

The touch screen panel 111 may include a hand touch panel of capacitive overlay type. The hand touch panel may include a plurality of scan input ports (hereinafter, referred to as 'scan port') and a plurality of detection output ports (hereinafter, referred to as 'detection port'). The hand touch panel may generate detection information (e.g., a signal that indicates an amount of capacitance variation) and may transfer the detection information to the touch screen controller through the detection port in response to touch or proximate (e.g., hovering) of a conductor object (e.g., finger) according to a scan control signal from the touch screen controller of the controller 170 input to the scan port.

The touch screen panel 111 may include a pen touch panel, such as a digitizer sensor substrate. The pen touch panel may be configured with an electro-magnetic resonance (EMR). Accordingly, the pen touch panel may generate detection information in response to hovering or touch of a pen specially manufactured to generate a magnetic field, and may transfer the detection information to the touch screen controller. The pen touch panel may include a button. For instance, if the user presses the button, the magnetic field generated from a coil of a pen may vary. The pen touch panel may generate detection information in response to variation of the magnetic field, and may transfer the detection information to the touch screen controller of the controller 170.

The touch screen panel 111 may include one or more capacitor arrays for recognition of touch input. For instance, a first capacitor array may be installed at the touch screen panel 110 to recognize direct touch, glove touch, cover touch, and cover glove touch, and a second capacitor array may be installed at the touch screen panel 110 for recognizing hovering. Further, a single capacitor array capable of recognizing both of the multi-touch and the hovering may be installed at the touch screen panel 110.

The key input unit 120 may include at least one touch key of capacitive overlay type. The touch key may generate detection information in response to the touch or the hovering of the conductor object and may transfer the detection information to the touch key controller of the controller 170.

The key input unit 120 may include other types of keys in addition to (or in place of) touch type keys. For instance, the key input unit 120 may include at least one dome key. When the user pushes the dome key, the dome key is modified and comes in contact with a printed circuit board. Accordingly, a key event may occur from the printed circuit board and may be transferred to the controller 170. In some aspects, keys that are part of the key input unit 120 may be referred to as "hard keys" and keys displayed on the display unit 110 may be referred to "as a soft keys."

The RF communication unit 130 may perform voice call, image call or data communication with an external device through a network under control of the controller 170. Further, the RF communication unit 130 may include a mobile communication module (3 Generation (3G) mobile communication module, 3.5-Generation (3.5G) mobile communication module, 4 Generation (4G) mobile communication module, or the like), a digital broadcasting module (e.g., DMB module), and a short distance mobile module (e.g., wireless fidelity (Wi-Fi) module, a Bluetooth module, and/or a Near Field Communication (NFC) module).

The audio processor 140 is connected with the speaker SPK and the microphone MIC to input and output an audio signal (e.g., voice data) for voice recognition, voice recording, digital recording and call. The audio processor 140 receives the audio signal (e.g., voice data) from the controller 170, and digital-to-analog (D/A) converts the received audio signal, amplifies and outputs the analog signal to the speaker SPK. The speaker SPK converts the audio signal received from the audio processor 140 into a sound wave to output the sound wave. The microphone MIC converts the sound wave from a person or other sound sources into the audio signal. The audio processor 140 analog-to-digital A/D converts the audio signal received from the microphone MIC to transfer the digital signal to the controller 170.

The audio processor 140 may provide audible feedback according to change of an operation mode of the touch screen. For instance, when the operation mode is changed, the audio processor 140 may output a voice signal or a sound signal to report the changed operation mode.

The sensor unit 150 detects a state of the electronic device 100. The sensor unit 150 may include a sensor to detect an opening or a closing of the cover, for example, a Hall sensor. The Hall sensor may be mounted at a specific region (e.g., a specific corner of a bezel region, a specific region of a top end or a bottom end, and a specific region of a left or right side) of the electronic device 100. A magnet may be mounted at the cover corresponding to a location in which the Hall sensor is mounted when the cover is closed. Accordingly, the Hall sensor may detect the magnet of the cover when the cover is closed and transmit detection information indicating the close of the cover to the controller 170. Additionally or alternatively, the sensor unit 150 may include an optical sensor as a sensor to detect an opening or a closing of the cover. The optical sensor may detect the opening/closing of the cover according to detection of an external optical signal. Furthermore, the sensor unit 150 may include an acceleration sensor, a geomagnetic sensor, and/or a gyro sensor as well as the sensor for detecting the opening/closing of the cover. The controller 170 may recognize motion and rotation of the electronic device 100 by using those sensors.

The memory 160 may include any suitable type of volatile and non-volatile memory. For example, the memory 160 may include a Read-Only Memory (ROM), Random Access Memory (RAM), a flash memory, a Solid State Drive (SSD), or a Hard Drive (HD). The memory 160 may store data generated according to an operation of the electronic device 100 or received from the exterior through the RF communication unit 130 under control of the controller 170. The memory 160 may include a buffer as temporary data storage. The memory 160 may store various preset information (e.g., screen brightness, vibration when the touch is generated, automatic rotation of the screen, and the like) to set a use environment of the electronic device 100. Thus, the controller 170 may operate the electronic device 100 with reference to the preset information. The memory 160 may include a main memory and a secondary memory. The main memory may be implemented by, for example, a random access memory (RAM). The secondary memory may be implemented by a disc, a RAM, a read only memory (ROM), a flash memory, or the like. The main memory may store various programs loaded from the secondary memory, for example, a booting program, an operating system, and applications.

If power of a battery is supplied to the controller 170, the booting program may be firstly loaded into the main memory. The booting program may load the operating system into the main memory. The operating system may load the application into the main memory. The controller 170 (e.g., application processor (AP)) may access the main memory to interpret a command (routine) of a program to execute a function according to the interpreting result. For example, the various programs may be loaded into the main memory to be operated as a process.

The controller 170 may include any suitable type of processing circuitry. For example, the controller 170 may include a processor, such as an x86-type processor, an ARM-based processor, or a MIPS-based processor. In another example, the controller 170 may include an Application Specific Integrated Circuit (ASIC). In yet another example, the controller 170 may include a Field-Programmable Gate Array (FPGA). In operation, the controller 170 controls an overall operation of the electronic device 100 and a signal stream between internal constituent elements of the electronic device 100, performs a function to process data, and controls supply of power to the internal constituent elements of the electronic device 100 from the battery. Additionally or alternatively, in some implementations, the controller 170 may include one or more of a touch screen controller 171, a touch key controller 172, and an application processor (AP) 173. Additionally or alternatively, one or more processing circuitry elements, such as of the touch screen controller 171, the touch key controller 172, and the application processor (AP) 173 may be implemented as discrete components.

The touch screen controller 171 may receive and analyze the detection information from the touch screen panel 111 to recognize that a touch, hovering, push of a pen button, and the like occurs. The touch screen controller 171 may determine a hovering region on the touch screen in response to the hovering to calculate hovering coordinates (x_hovering, y_hovering) of the hovering region. The touch screen controller 171 may transfer a hovering event including the calculated hovering coordinates to, for example, the AP 173. Further, the hovering event may include a depth value. For instance, the hovering event may include three-dimensional hovering coordinates (x, y, z). The z value may mean a depth. The touch screen controller 171 may determine a touch region on the touch screen in response to the touch to calculate a touch coordinate (x_touch, y_touch) on the touch region. The touch screen controller 171 may transfer a touch event including the calculated touch coordinate to, for example, the AP 173. The touch screen controller 171 may transfer a pen button event to, for example, the AP 173 in response to push of the pen button.

The touch screen controller 171 may include a touch management module 171a. For example, the touch control module 171a may include a firmware embedded in a memory (e.g., ROM, flash memory, or EPROM) of the touch screen controller 171 so that the touch screen controller 171 performs an operation of the firmware. The touch management module 161 may be configured to perform an operation to recognize a touch type (for example, the above described direct touch type or indirect touch type) or a hovering type, an operation to set an operation mode of the touch screen corresponding to the recognized touch type, and an operation to set an operation mode of a touch key corresponding to the operation mode of the touch screen. Moreover, the touch management module 171a may be configured to perform an operation to recognize whether the cover is closed, an operation to set the operation mode of the touch screen corresponding to the closed state of the cover, and an operation to set the operation mode of the touch screen corresponding to an open state of the cover.

Additionally or alternatively, in some implementations, the touch management module 171a may include firmware installed in an application processor (AP) or a central Processing Unit (CPU). Additionally or alternatively, in some implementations, the touch management module 171a may include an application which is stored in the secondary memory and is loaded into the main memory to be executed under control of the operating system.

The touch key controller 172 may receive and analyze the detection information from the touch key to recognize that the touch is occurred. The touch key controller 172 may transfer a touch event to, for example, the AP 173 in response to the touch.

The AP 173 may receive a touch screen event (e.g., a hovering event, a touch event, a pen button event, and the like) from the touch screen panel 111 to perform a function corresponding to the touch screen event. Further, the AP 173 may receive a touch key event from the touch key to perform a function corresponding to the touch key event.

The AP 173 may execute various programs stored in the memory 160. For example, the AP 173 may load various programs from the secondary memory to the main memory so that the various programs may be operated as a process.

As noted above, the controller 170 may include various processors as well as the AP 173. For instance, the controller may include at least one central processing unit (CPU). Further, the controller 170 may include a graphic processing unit (GPU). Further, when the controller 170 is equipped with a mobile communication module (e.g., 3-Generation mobile communication module, a 3.5-Generation mobile communication module, or a 4-Generation mobile communication module), a communication processor (CP) may be included. The processors may be configured by integrating two or more independent cores (e.g., quad-core) as one package which is formed as a single integrated circuit. For instance, the AP 173 may be one integrated as one multi-core processor. The above described processors (e.g., an AP and an ISP) may be formed as a System on Chip (SoC). In addition, the above processors (e.g., an AP and an ISP) may be packaged with a multi-layer.

The electronic device 100 may further include elements that are not mentioned in the above such as an ear jack, a GPS reception module, and a camera.

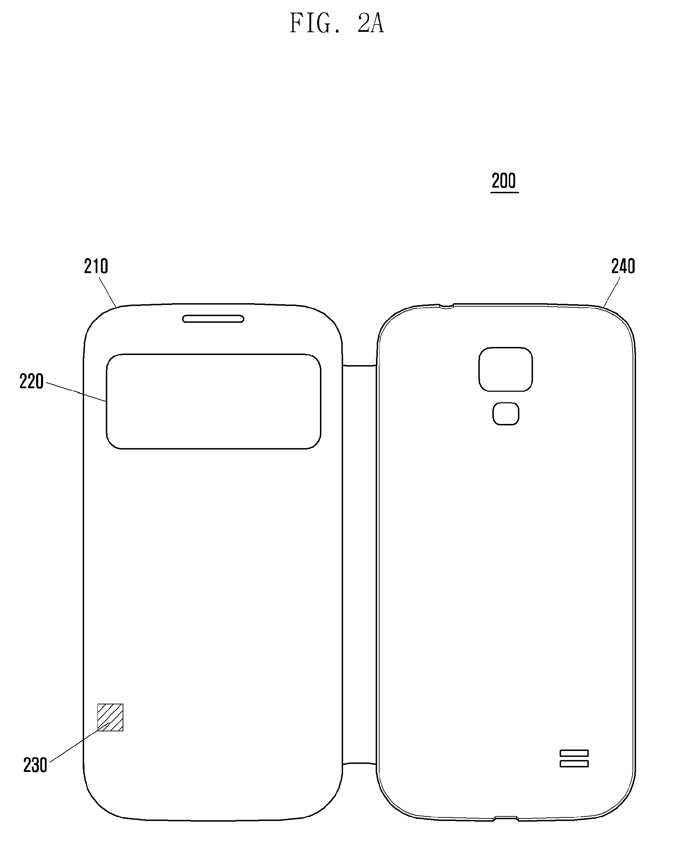

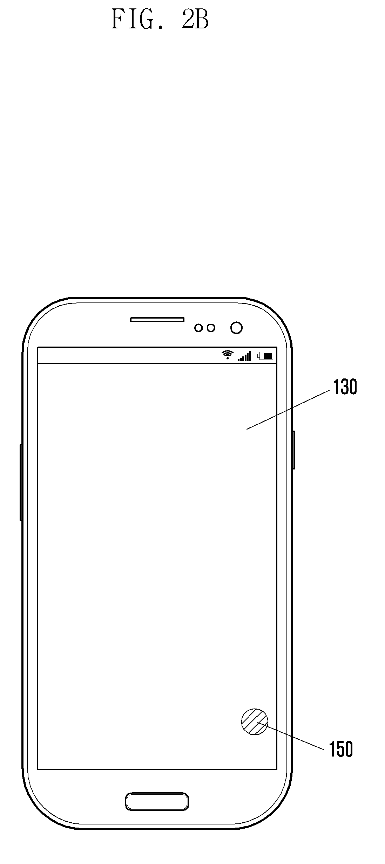

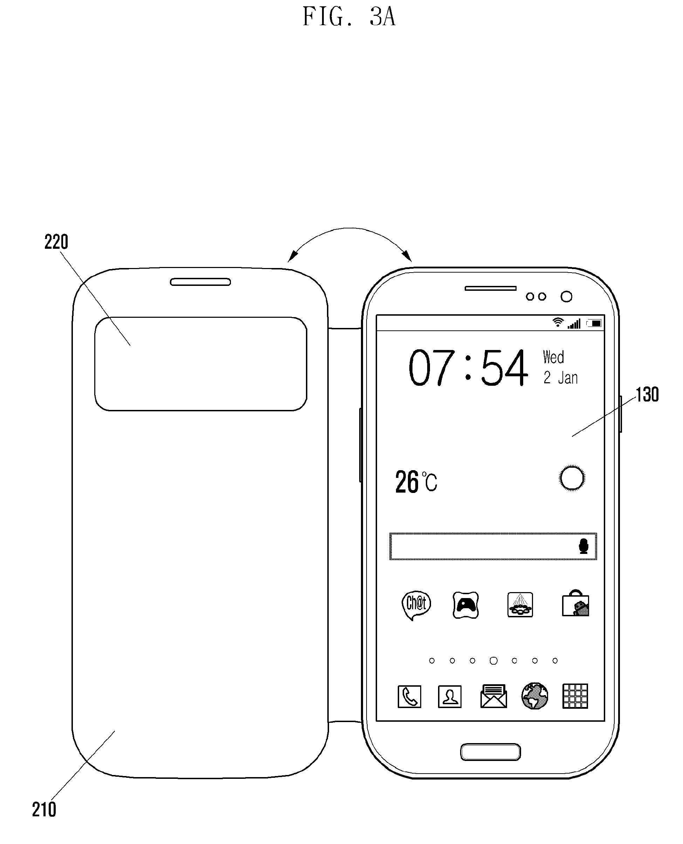

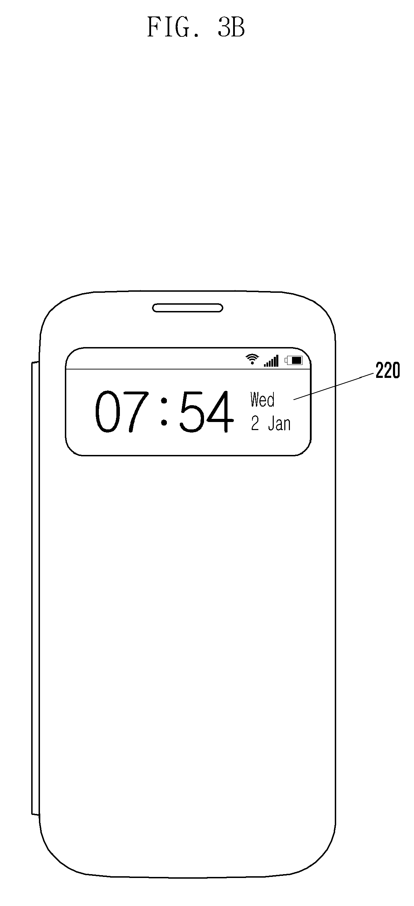

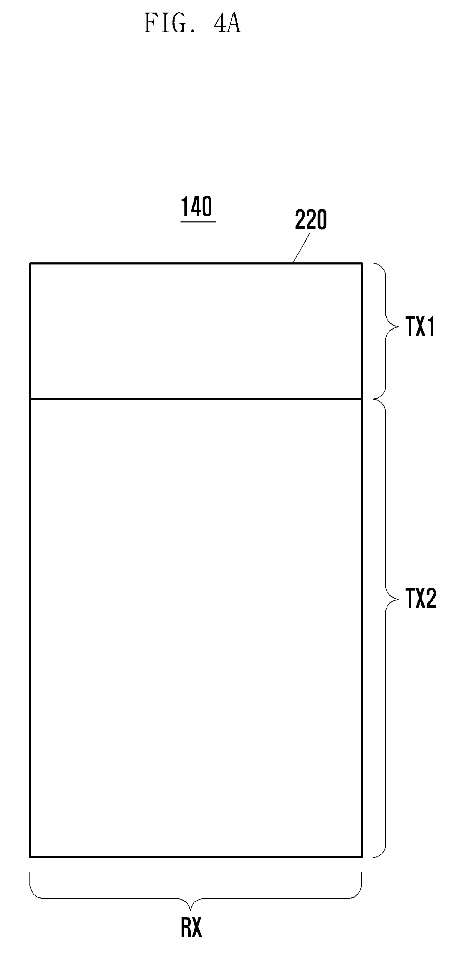

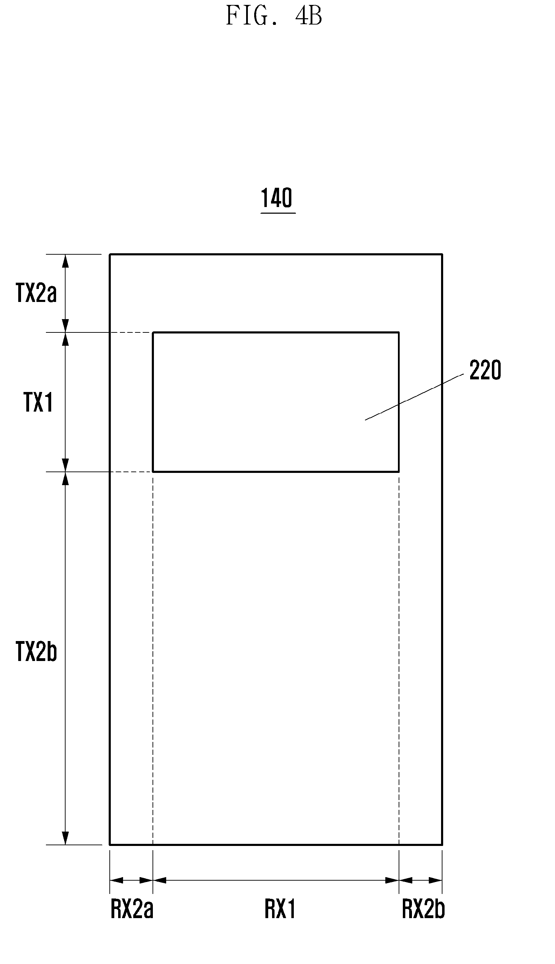

FIGS. 2A and 2B are diagrams illustrating an example of an electronic device and an example of a cover for the electronic device according to an aspect of the present disclosure. FIGS. 3A and 3B are diagrams illustrating an open state of the cover and a closed state of the cover according to an aspect of the present disclosure. FIGS. 4A and 4B are diagrams illustrating an active region of a touch screen panel corresponding to a view area of the cover according to an aspect of the present disclosure.

Referring to FIG. 2A to 4B, as shown in FIG. 2A, the cover 200 may include a front cover 210 to protect the display unit 130 of the electronic device and a rear cover 240 that attaches to a rear surface of the electronic device. Accordingly, the rear cover 240 is fixed and mounted at the electronic device, and the front cover 210 folds relative to the rear cover 240. Further, the front cover 210 has a view area 220 which may form an opening (or a hole) in the front cover. Although in this example, the view area 220 is an opening or a hole, in other example, the view area 220 may include a structure made from any suitable type transparent or translucent material. As illustrated, the opening 220 can occupy only a portion of the surface of the front cover 210 and it may permit the user to view the display unit 130 in a state of the electronic device in which the front cover 210 is closed. In addition, when the sensor unit 150 includes a Hall sensor, a magnet 230 is mounted in a location of the front cover 210 corresponding to the Hall sensor. Further, the Hall sensor 150 is mounted at a location of the electronic device corresponding to the magnet 230 the front cover 210 to recognize the folding of the front cover 210 (i.e., open/close of the cover) as shown in FIG. 2B.

The foregoing aspect has described a configuration where the cover 200 shown in FIG. 2A is combined with the electronic device. However, in other aspects, covers having various other structures may be used to have the same or similar configuration according to following aspects, which may be clearly comprehended to those skilled in the art to which the aspect pertains.

The cover 200 shown in FIG. 2A may be combined with the electronic device as shown in FIG. 3A. In this case, the front cover 210 may be folded (closed) or unfolded (open). In this case, as shown in FIG. 3A, if the front cover 210 is unfolded, a front surface of the electronic device is exposed so that a user may view information displayed on the display unit 130. The controller 170 may recognize an open state of the cover, and, accordingly, may output a scan control signal to all scan ports of the touch screen panel 111 to activate the entire touch screen panel 111. Further, the controller 170 may set an operation mode of a touch screen corresponding to the open state of the cover.

As shown in FIG. 3B, if the front cover 210 is folded, the front surface of the electronic device may be protected. Furthermore, the controller 170 may recognize the closed state of the cover 210 according to detection information of the sensor unit 150. Accordingly, the controller 170 may change the displayed user interface (UI). For instance, the display unit 110 may display a current time and date on a display region corresponding to a view area 220 as shown in FIG. 3B under control of the controller 170. For example, when the cover is closed, the controller 170 may activate a scan port and a detection port of the touch screen panel 111 corresponding only to that portion of the touch panel that is located underneath the view area 220. Additionally or alternatively, as another example, when the cover is closed, the controller 170 may activate a scan port and a detection port of the touch screen panel 111 that is exposed by the view area 220. When the user touches the view area 220, the controller 170 may detect the touch through the portion of the touch screen panel 111 that has remained activated in order to execute a function corresponding to the touch. Furthermore, the controller 170 may set the operation mode of the touch screen corresponding to the closed state of the cover.

In some aspects, the view area 220 may be set to a size sufficient to view a part of the touch screen. For instance, the view area 220 may be set as a display region corresponding to a portion of scan ports (or a portion of detection ports) and entire detection ports (or entire scan ports). Accordingly, in the example of FIG. 4A, if the front cover 210 is open, the controller 170, for example the touch screen controller 171, may activate both of scan ports TX1 and TX2 and activates a detection port RX.

For example, the controller 170 may output the scan control signal to the scan ports TX1 and TX2, and may receive detection information from the detection port RX. The controller 170 analyzes the detection information to recognize a touch region in the touch screen. In this case, the controller 170 may set a threshold value of capacitance to determine presence of a touch corresponding to an open state. If the front cover 210 is closed, the touch screen controller 171 activates a scan port TX1, inactivates the scan port TX2, and activates the detection port RX. For example, the controller 170 outputs the scan control signal to the scan port TX1, and receives detection information from the detection port RX. The controller 170 analyzes detection information to recognize whether a touch occurs on the display region corresponding to the view area 220. In this case, the controller 170 may set a threshold value of capacitance determining the touch corresponding to the closed state.

According to another aspect, as shown in FIG. 4B, the view area 220 may be set as a display region corresponding to some scan port and detection port. In a case of FIG. 4B, if the front cover 210 is open, the controller 170 may activate all of scan ports TX1, TX2a, and TX2b, and may active detection ports RX1, RX2a, and RX2b. If the front cover 210 is closed, the controller 170 may active only the scan port TX1 and the detection port RX1, while deactivating scan ports TX2a and TX2b and detection ports RX2a and RX2b.

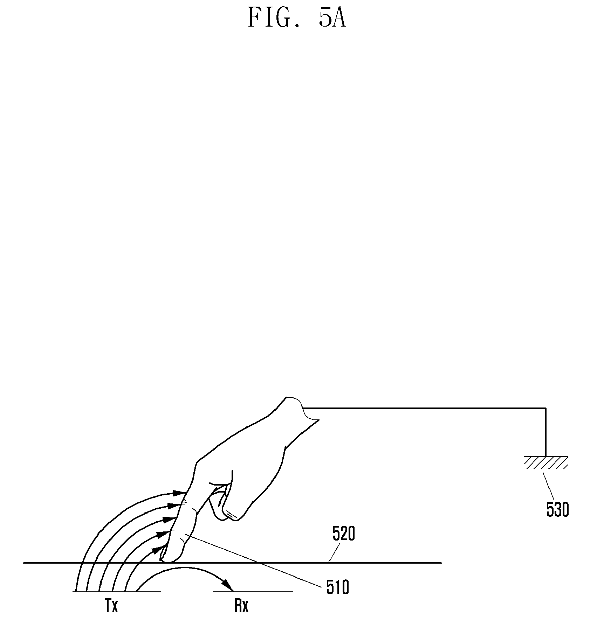

FIG. 5A is a diagram illustrating a situation where a finger touches a touch screen of the electronic device according to an aspect of the present disclosure.

Referring to FIG. 5a, capacitance is formed between a transmission channel Tx and a reception channel Rx. In this case, if the finger 510 is in contact with the touch screen 520, a part of electric field lines (e.g., five lines in FIG. 5A) output from the transmission channel Tx is input to a finger 510 connected to a ground 530. Accordingly, the capacitance between the transmission channel Tx and the reception channel Rx is changed, and the touch screen panel 111 may generate detection information corresponding to an amount of capacitance variation and transfer to the controller 170. If the amount of capacitance variation is equal to or greater than a first threshold value, the controller 170 may recognize that a direct touch is occurred on the touch screen 520. A ground 530 connected to the finger 510 may be the electronic device (i.e., a ground formed at the electric device) or may be an earth ground. For example, the ground 530 may be an earth surface in a state of a free-space. Otherwise, the ground 530 may be the electronic device in a state in which the user catches the electronic device.

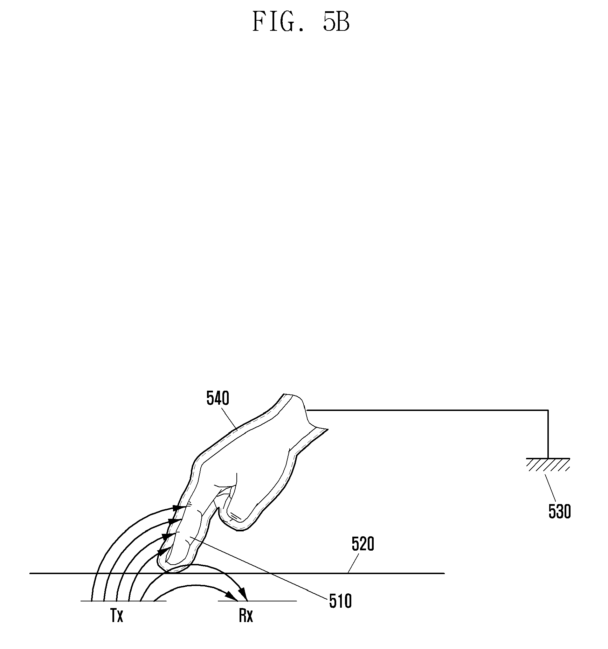

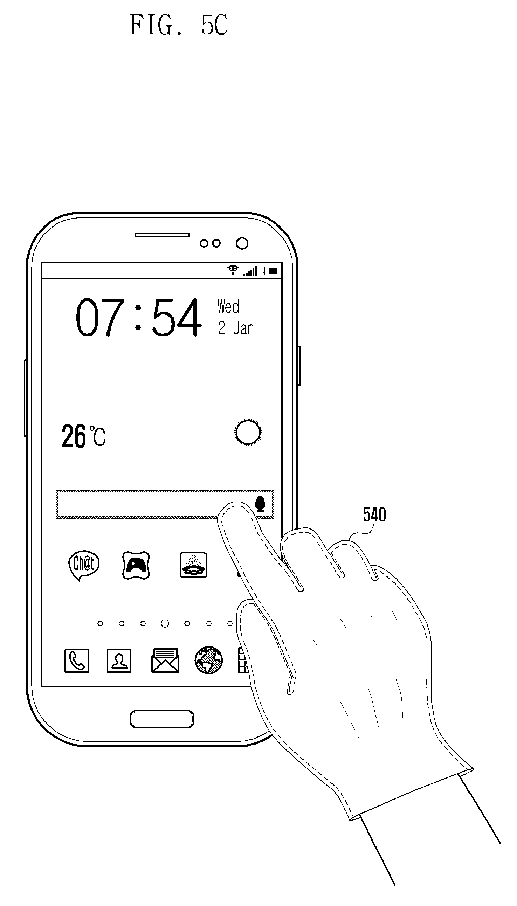

FIGS. 5B and 5C are diagrams illustrating a situation where a finger in glove touches the touch screen of the electronic device according to another aspect of the present disclosure. In this case, a used glove may be called a "touch glove". The used glove may include a general glove, for example, a cotton glove, a leather glove, a vinyl glove, a rubber glove, a ski glove, or a woolen glove. According to the present example, the touch glove may include a glove which is specially manufactured for an operation of touch screen or various gloves which are not specially manufactured.

Referring to FIGS. 5A and 5B, the user may touch the touch screen 520 while the user is wearing a touch glove 540. Electric field lines (e.g., four lines in FIG. 5B) smaller than the case of FIG. 5A may be input to a finger 510 connected to a ground 530. Accordingly, the amount of capacitance variation between the transmission channel Tx and the reception channel Rx may be less than the case of the direct touch of FIG. 5A.

The touch screen panel 111 may generate detection information and transfer to the controller 170, for example, the touch screen controller 171. When the amount of capacitance variation is less than a first threshold value and greater than a second threshold value, the controller 170 may recognize that an indirect touch (e.g., a touch in a state in which the user puts on the glove, or "glove touch") has occurred. For instance, if the amount of capacitance variation less than the first threshold value and greater than the second threshold value is detected for a preset time (e.g., 100 ms), the controller 170 may change a preset value from the first threshold value to the second threshold value.

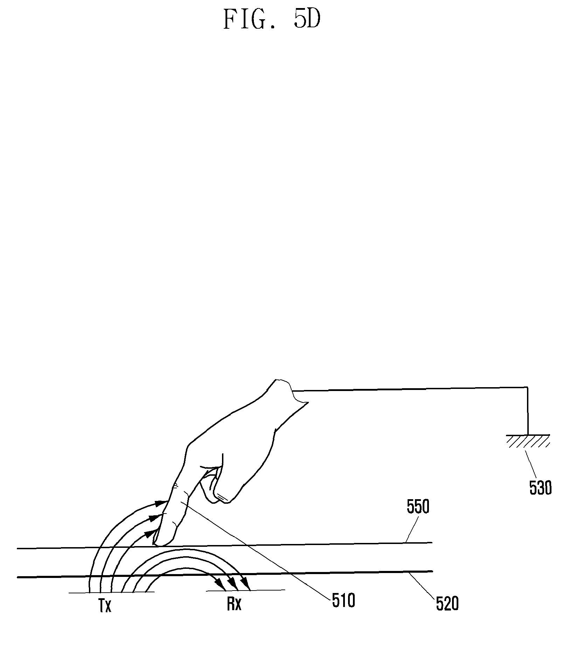

FIG. 5D is a view illustrating a case where a finger touches the cover in a state in which the cover closes the touch screen of the electronic device according to an aspect of the present disclosure.

Referring to FIG. 5D, the user may touch the cover 550 with the finger 510. Here, a thickness of the cover 550 may be greater than that of the touch glove 540. Then, the smaller number of electric field lines (e.g., three lines in FIG. 5D) than the case of FIG. 5B may be input to the finger 510 connected to the ground 530. The amount of capacitance variation between the transmission channel Tx and the reception channel Rx may be less than that of a case of the indirect touch of FIG. 5B. For instance, when the amount of capacitance variation less than the second threshold value is detected for a preset time (e.g., 100 ms), the controller 170 may recognize that the cover 550 is closed regardless of a detection operation of the sensor unit 150 (e.g., Hall sensor) and may recognize that the cover touch is occurred on the touch screen 520. In addition, when the amount of capacitance variation less than the second threshold value and greater than a third threshold value is detected for a preset time, the controller 170 may set a preset value to the third threshold value. Meanwhile, the cover 550 may be thinner than the touch glove 540. Accordingly, the amount of capacitance variation of the cover touch may be greater than the amount of capacitance variation of the indirect touch. Accordingly, the third threshold value may be set to be greater than the second threshold value.

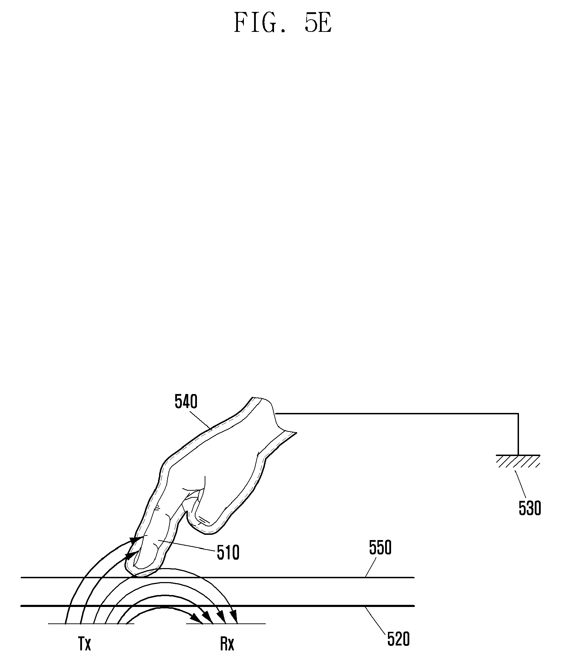

FIG. 5E is a view illustrating a case where a finger in glove touches the cover in a state in which the cover closes the touch screen of the electronic device according to an aspect of the present disclosure.

Referring to FIG. 5E, a user may touch the cover 550 which is located on a touch screen 520 in a state in which the user puts on the touch glove 540. Then, the smaller number of electric field lines (e.g., two lines in FIG. 5E) compared to the glove touch or the cover touch may be input to the finger 510 connected to the ground 530. Accordingly, the amount of capacitance variation between the transmission channel Tx and the reception channel Rx may be less than that of the direct touch, the indirect touch, and the cover touch. If the amount of capacitance variation is detected, the controller 170 may recognize that the cover 550 is closed and the user touch is the cover glove touch. In addition, when the amount of capacitance variation less than the third threshold value and greater than a fourth threshold value is detected for a preset time, the controller 170 may set the preset value to the fourth threshold value.

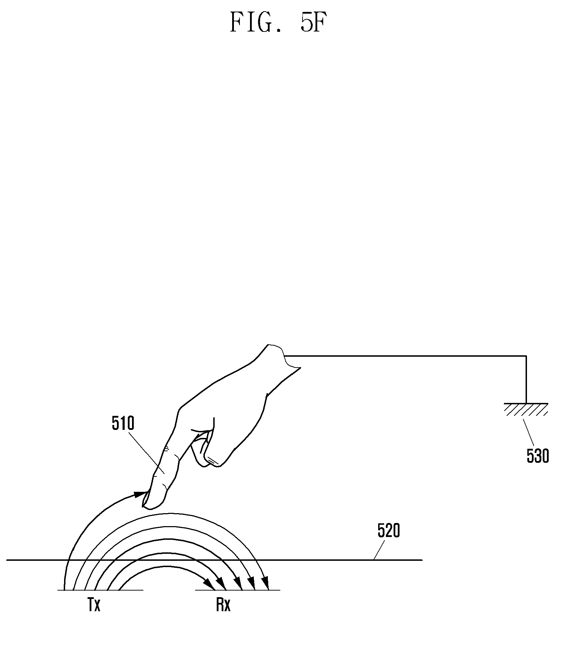

FIG. 5F is a view illustrating a case where a finger hovers over the touch screen of the electronic device according to an aspect of the present disclosure.

Referring to FIG. 5F, the user may move the finger 510 close to the touch screen 520. Then, the smaller number of electric field lines (e.g., one line in FIG. 5F) compared to the cover glove touch may be input to the finger 510 connected to the ground 530. The amount of capacitance variation between the transmission channel Tx and the reception channel Rx may be less than cases of the above touches. If such amount of capacitance variation is detected, the controller 170 may recognize proximity (e.g., hovering). For instance, if the amount of capacitance variation is detected less than the fourth threshold value and greater than a fifth threshold value, the controller 170 may recognize that the hovering is occurred on the touch screen 520.

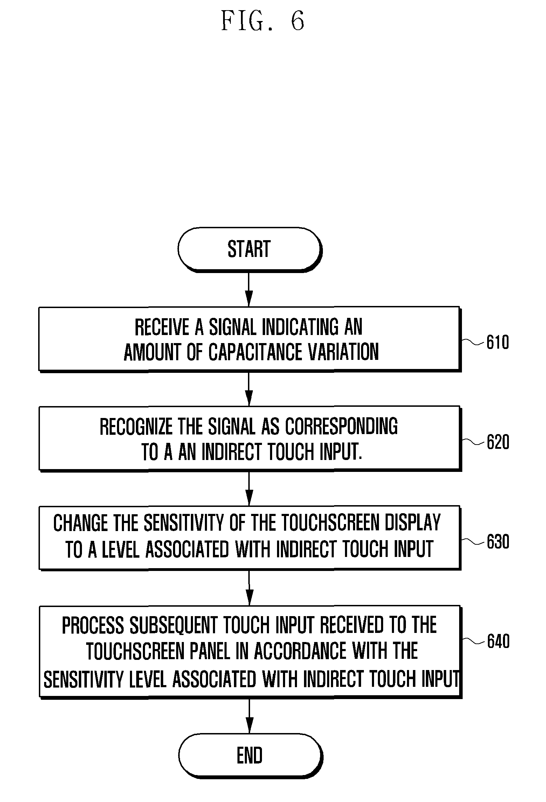

FIG. 6 is a flowchart of an example of a process for setting the touch screen of the electronic device to an indirect touch mode according to an aspect of the present disclosure.

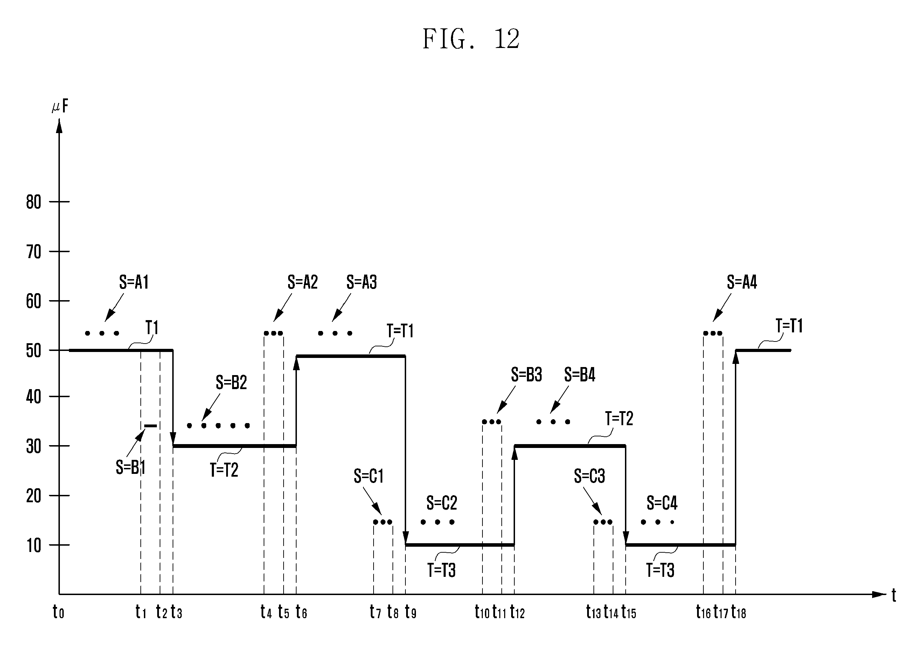

Referring to FIG. 6, at operation 610, a controller 170 receives a signal from the touch screen panel that indicates an amount of capacitance variation. The touch signal may be generated based on a touch (e.g. direct or indirect) to the touch panel. At operation 620, the controller 170 recognizes the as being the result of an indirect touch based on the signal. For instance, when an amount of capacitance variation less than the first preset value and greater than the second preset value (second preset value < first preset value) is detected for a preset time in a state in which a threshold value (e.g. threshold T discussed with respect to FIG. 12) is set to the first preset value (direct touch value), the controller 170 may recognize that the touch is an indirect touch (e.g., glove touch). When frames (e.g., eight frames) having a capacitance variation less than the first preset value and greater than the second preset value are continuously detected within a touch screen region (e.g., the view area 220 of the front cover 210) having a preset size in a state in which the threshold value is set to the first preset value, the controller 170 may recognize that the touch is an indirect touch (e.g., a touch in a closed state of the cover).

At operation 630, the controller 170 changes the touch sensitivity of the touch panel to a value that is associated with indirect touch input. For instance, the threshold value may be changed from the first preset value to the second preset value. For instance, in the example of FIGS. 3A to 4B, when the user touch is recognized as a touch occurring while the cover is in a closed state, some scan ports (e.g., TX1) may be activated and other scan ports (e.g., TX2, TX2a, TX2b) may be deactivated and all of the detection ports may be activated. Doing so may result in a portion of the screen corresponding to the deactivated ports being disabled and portion of the screen corresponding to the activated ports being enabled. Alternatively, when the user touch is recognized as the touch in a closed state of the cover, some (e.g., TX1) scan ports may be activated and the other scan ports (e.g., TX2, TX2a, and TX2b) may be inactivated, some detection ports (e.g., RX1) may be activated, and the other detection ports (e.g., RX2, RX2a, and RX2b) may be inactivated.

At operation 640, the controller 170 may process further touch input that is subsequently received at the electronic device in accordance with the new touch sensitivity.

In some implementations, operations of FIG. 6 may be performed by the touch screen controller 171 where the touch management module 171a is embedded in the controller 170 as a firmware. Additionally or alternatively, in some implementations, the touch management module 171 a may be an application or a partial configuration of the OS. In this case, the operations of FIG. 6 may be performed by the AP 173. Following operations may be performed by the touch screen controller 171 or the AP 173.

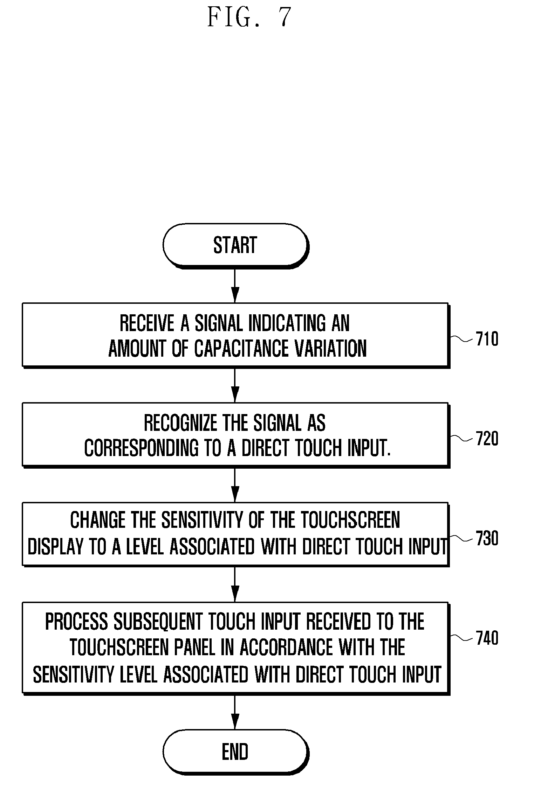

FIG. 7 is a flowchart of an example of a process for setting the touch screen of the electronic device to a direct touch mode according to an aspect of the present disclosure. In some aspect, the process shown in FIG. 7 and the process shown in FIG. 6 may be implemented in the same electronic device so that an operation mode of the touch screen may be automatically switched without a user input.

Referring to FIG. 7, at operation 710, the controller 170 receives a signal from the touch screen panel 111 indicating an amount of capacitance variation. The signal may be generated in response to a touch (e.g. direct or indirect) to the touch panel. At operation 720, the controller 170 recognizes the signal as being the result of a direct touch based on the signal. For instance, when an amount of capacitance variation greater than the direct touch value (direct touch value > indirect touch value) is detected in a state in which the threshold value is set to the indirect touch value, the controller 170 may recognize that the touch is a direct touch (e.g., finger touch or a touch in an open state of the cover).

Additionally or alternatively, if an amount of capacitance variation greater than the direct touch value is detected for a preset time in a state in which the threshold value is set to the indirect touch value, the controller 170 may recognize the touch as a direct touch. In another aspect, if frames (e.g., eight frames) having the amount of capacitance variation greater than the direct touch value are continuously detected in a state in which the threshold value is set to the indirect touch value, the controller 170 may recognize the user touch as the direct touch.

At operation 730, the controller 170 sets the touch sensitivity of the touch panel to a value corresponding to direct touch input. For instance, the threshold (e.g., threshold T which is discussed with respect to FIG. 12) value may be changed from the indirect touch value to the direct touch value. In addition, in some implementations, as described with reference to FIG. 6, all scan ports and all detection ports may be activated.

At operation 740, the controller 170 may process subsequent touch input received at the touch panel based on the new sensitivity touch sensitivity.

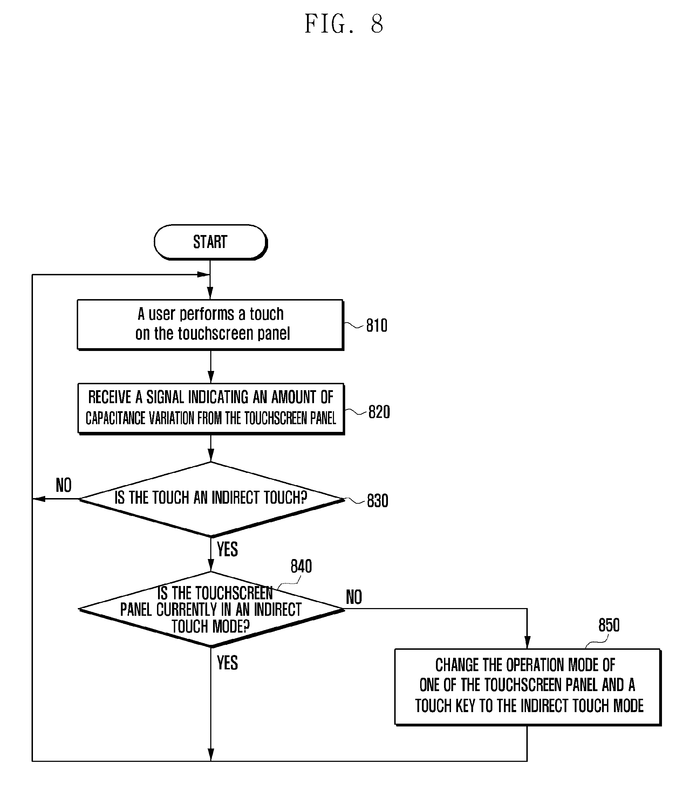

FIG. 8 is a flowchart of an example of a process for changing operation modes of the touch screen and a touch key of the electronic device from the direct touch mode to the indirect touch mode according to an aspect of the present disclosure.

Referring to FIG. 8, at operation 810, a touch is performed on the touch panel 111. When detected touch is performed on the touch panel, at operation 820, the controller 170 receives a signal from the touch panel indicating a value of a capacitance variation. At operation 830, the controller 170 determines whether the touch is an indirect touch (e.g., a glove touch, a touch in a closed state of the cover, etc.) based on the signal. For instance, if an amount of capacitance variation less than the direct touch value and greater than the indirect touch value is detected for a preset time, the controller 170 may determine that the touch is an indirect touch.

Additionally or alternatively, if a preset number (e.g., 8 frames) of frames indicating an amount of capacitance variation less than the direct touch value and greater than the indirect touch are continuously detected, it may be determined that the touch is an indirect touch.

If it is determined that the touch is an indirect touch, at operation 840, the controller 170 determines whether a current operation mode of the touch screen is an indirect touch mode. In some implementations, the touch screen (or the electronic device) is considered in indirect touch mode when a threshold is set to a particular value (e.g., the threshold T discussed with respect to FIG. 12).

If the current operation mode is not the indirect touch mode, at operation 850, the controller 170 changes the operation modes of at least one of the touch screen and the touch key 121 to the indirect touch mode. For instance, in some implementations, changing the operation mode of the touch screen may include setting the threshold to the value associated with the indirect touch mode. Additionally or alternatively, a scan port which does not correspond to the view area 220 may be changed to an inactive state. In addition, a detection port which does not correspond to the view area 220 may be changed to an inactive state.

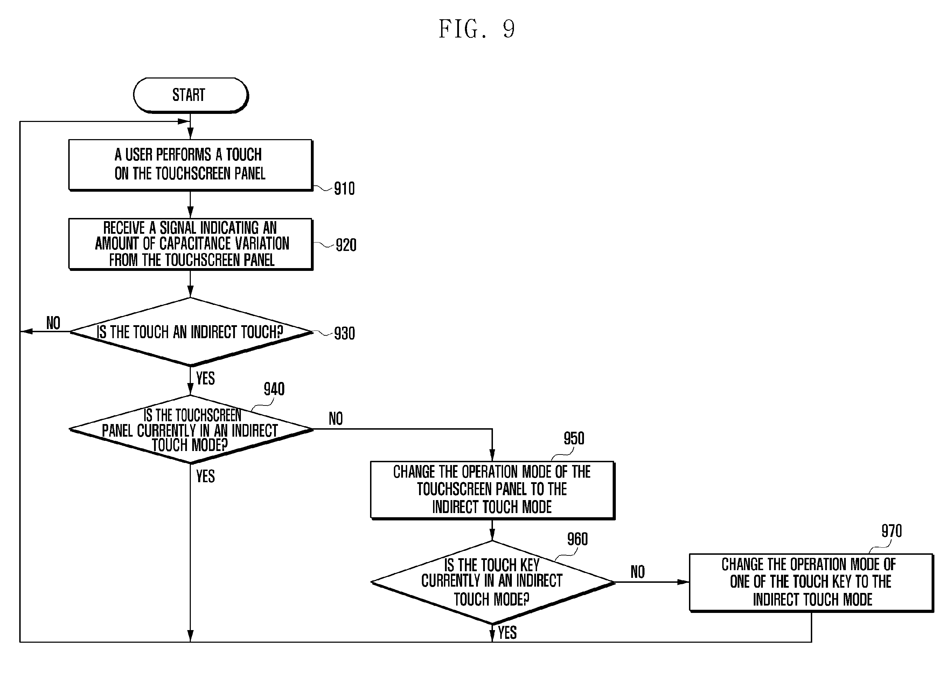

FIG. 9 is a flowchart of an example of a process for changing the operation mode of the touch key from the direct touch mode to the indirect touch mode according to an aspect of the present disclosure.

Referring to FIG. 9, at operation 910, a touch is performed on the touch screen panel 111. At operation 920, the controller 170 receives a signal indicating an amount of capacitance variation. At operation 930, the controller 170 determines whether the touch is an indirect touch (e.g., a glove touch, a touch in a closed state of the cover) based on the received signal. If it is determined that the touch is an indirect touch, at operation 940, the controller 170 determines whether a current operation mode of the touch screen is an indirect touch mode. If the current operation mode is not the indirect touch mode, at operation 950, the controller 170 changes operation modes of the touch screen from the direct touch mode to the indirect touch mode. For instance, a threshold value used to determine whether input detected on the touch pad constitutes valid touch input may be changed to a preset value corresponding to the indirect touch mode.

Additionally or alternatively, in some implementations, a scan port which does not correspond to the view area 220 may be changed to an inactive state. In addition, a detection port which does not correspond to the view area 220 may be changed to an inactive state.

At operation 960, the controller 170 determines whether an operation mode of the touch key 121 is the indirect touch mode. When the operation mode of the touch key 121 is not the indirect touch mode, at operation 970, the controller 170 changes the operation mode of the touch key 121 from the direct touch mode to the indirect touch mode. For instance, a threshold value used to determine whether input detected on the touch key 121 constitutes valid touch input may be changed to a preset value corresponding to the indirect touch mode.

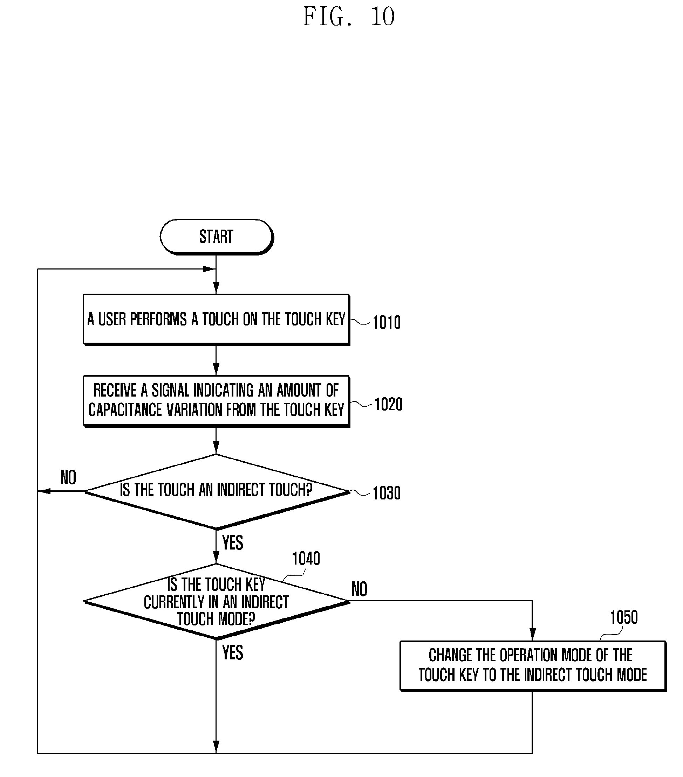

FIG. 10 is a flowchart of an example of a process for changing the operation mode of the touch key from the direct touch mode to the indirect touch mode according to another aspect of the present disclosure.

Referring to FIG. 10, at operation 1010, a touch (e.g. direct or indirect) is placed on the touch key 121. At operation 1020, the controller 170 receives a signal indicating an amount of capacitance variation. At operation 1030, the controller 170 determines whether the touch is an indirect touch (e.g., a glove touch) based on the received signal. For instance, if an amount of capacitance variation less than the direct touch value and greater than the indirect touch value is detected for a preset time, the controller 170 may determine that the touch is an indirect touch. Additionally or alternatively, if the preset number (e.g., 8 frames) of frames having the amount of capacitance variation less than the direct touch value and greater than the indirect touch are continuously detected, it may be determined that the touch is an indirect touch. If it is determined that touch on the touch key 121 is a direct touch, at operation 1040, the controller 170 determines whether a current operation mode of the touch key 121 is the indirect touch mode. If the current operation mode is not the indirect touch mode, at operation 1050, the controller 170 changes the operation mode of the touch key 121 to the indirect touch mode. In some implementations, changing the operation mode of the touch key 121 may include changing a threshold value used determine whether signals received from the touch key correspond to valid touch input to a preset value corresponding to the indirect touch mode.

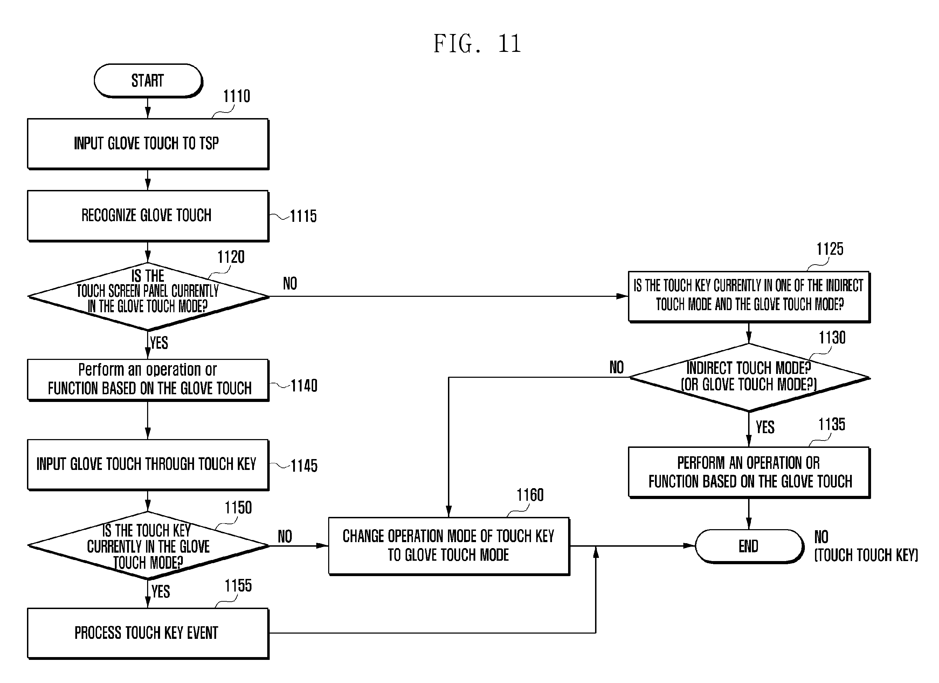

FIG. 11 is a flowchart of an example of a process for changing a touch mode according to an aspect of the present disclosure.

Referring to FIG. 11, touch is placed on the touch screen panel 111, and the touch screen panel 111 generates a signal indicating an amount of capacitance variation corresponding to the glove touch. At operation 1115, the controller 170, determines whether the touch is a glove touch (e.g., a touch performed by the user while wearing a glove). If the touch is recognized a glove touch, at operation 1120, the controller 170 may determine whether a current operation mode of the touch screen is set to a glove touch mode.

When the current operation mode is not set to the glove touch mode, at operation 1125, the controller 170 may change the operation mode of the touch screen from the direct touch mode to the glove touch mode. For instance, a threshold value used to determine whether signals generated by the touchscreen panel 111 correspond to valid touch input may be changed to a preset value (i.e., a threshold value less than a threshold value for detecting the direct touch) corresponding to the glove touch mode.

Next, at operation 1130, the controller 170 determines whether the operation mode of the touch key 121 is an indirect touch mode (or a glove touch mode). If the current operation mode of the touch key 121 is the indirect touch mode, at operation 1135, the electronic device may process the glove touch received at operation 1110 based on the glove touch mode. If the current operation mode of the touch key 121 is not the glove touch mode, the process may end.

At operation 1140, the electronic device may perform an operation or a function based on the touch.

At operation 1145, the controller 170 may detect input of a glove touch through the touch key 121. If the glove touch is input through the touch key 121, at operation 1150, the controller 170 determines whether the current operation mode of the touch key 121 is a glove touch mode. When the current operation mode of the touch key 121 is the glove touch mode, at operation 1155, the electronic device may perform an operation or function based on the touch glove touch.

When the current operation mode of the touch key 121 is not the glove touch mode, at operation 1160, the controller 170 may change an operation mode of the touch key 121 from the direct touch mode to the glove touch mode. For instance, the threshold value used to determine whether signals received from the touch key 121 correspond to valid touch input may be changed to a threshold value corresponding to the glove touch mode. After operation 1160 is performed, the procedure proceeds to operation 1165.

In some aspects, a conductive material may be included in a part or the whole of the glove. When the user touches a touch input unit (e.g., a touch screen panel, a touch key, and the like) in a state in which the user puts on such glove, the amount of capacitance variation which is rather greater than the currently set direct touch value may be continuously detected. For example, a preset number (e.g., eight frames (or greater)) of frames having the amount of capacitance variation greater than the direct touch value may be continuously detected. Accordingly, the controller 170 may recognize the user touch as the indirect touch to change a threshold value into the indirect touch value which is greater than the direct touch value. Accordingly, when the amount of capacitance variation equal to or greater than the indirect touch value is detected, the electronic device determines the detected variation amount of the capacitance as a valid value. The electronic device may generate a touch event according to the determination, and may execute a function corresponding to the touch event.

If the amount of capacitance variation less than the indirect touch value is detected for a preset time (e.g., 100ms) in a state in which the threshold value is set to the indirect touch value, the electronic device may recognize the user touch as the direct touch to set the threshold value to the direct touch value. If the preset number (e.g., 8 frames) of frames having the amount of capacitance variation less than the indirect touch value are continuously detected (or when the detection frequency exceeds the preset number) in a state in which the threshold value is set to the indirect touch value, the electronic device may recognize the user touch as the direct touch to set the threshold value to the direct touch value. Accordingly, when the amount of capacitance variation equal to or greater than the direct touch value is detected, the electronic device determines the detected variation amount of the capacitance as a valid value. The electronic device may generate a touch event according to the determination, and may execute a function corresponding to the touch event.

FIG. 12 is a diagram illustrating an example of process performed by the electronic device 100, in accordance with aspects of the disclosure. More particularly, in accordance with this example, the controller 170 receives a signal S indicating an amount of capacitance variation (or another characteristic) and compares the signal to the value of a threshold T. In some implementations, the signal S may be generated by the touch screen panel 111.

If the amount of capacitance variation (or another type of information) that is indicated by the signal S satisfies the threshold T, the electronic device 100 may recognize the signal S as touch input. In some implementations, for example, when the signal S is recognized as touch input, the signal S is treated as being the result of intentional touch input, (rather than noise or unintentional touch input). Accordingly, in such instances, the signal S may be processed as valid touch input and an operation or function may be performed by the electronic device in response to the touch input that is represented by the signal.

If the amount of capacitance variation (or another type of information) that is indicated by the signal S fails to satisfy the threshold T, the electronic device T treats the signal S as the product of noise (or another anomaly, such as an unintentional touch). In some implementations, when the signal is treated as the product of noise (or another anomaly) no function or operation is performed based on the signal.

In some aspects, the value of the threshold T may be varied. An example of a technique for varying the value of the threshold T is varied is discussed further below:

Referring to FIG. 12, at time t0, an operation mode of the touch screen may be set to a direct touch mode. When the operation mode is set to direct touch mode, the value of the threshold T is set to a first threshold value T1 (e.g., 50 µF). When the electronic device is operated in the direct touch mode, the controller 170 recognizes generation of a signal A1 that indicates an amount of a capacitance variation. In this example, the signal A1 is generated as a result of a direct touch to the touch screen panel 111. When a the amount of capacitance variation indicated by signal A1 is greater than the first threshold value T1, the controller 170 may process signal A1 as being generated as a result of authentic touch input (rather than being the result of noise or some other phenomenon). Afterwards, for example, the electronic device may execute a function corresponding to the recognized touch input.

At time t1, the controller 170 may recognize generation of a signal B1 that indicates an amount of capacitance variation. In this example, the signal B1 is generated as a result of a glove touch to the touch screen panel 111. Since the operation mode set at time t1 is the direct touch mode and the capacitance variation (or other information) indicated by of the signal B1 is less than the threshold T1, the controller 170 may not process the signal B1 as touch input. For example, the electronic device may take no action in response to the signal B1.

When the signal B1 continues to time t2, and the duration of the period (t2 - t1) exceeds a preset value (e.g., 100 ms), the controller 170 may change the operation mode of the touch screen from the direct touch mode to a glove touch mode at time t3. In doing so, the controller 170 may set the threshold T to a second threshold value T2 (e.g., 30 µF). In some implementations, the second threshold value T1 may be less than the first threshold value T1. While the electronic device is operated in the glove touch mode, the controller 170 may recognize generation of a signal B2. The signal B2 may be generated as a result of a glove touch to the touch screen panel 111. The processor 170 may process the signal B2 as valid touch input when the amount of capacitance variation of indicated by the signal B2 is greater than the second threshold value T2.

At time t4, the controller 170 may recognize generation of the signal A2. The signal A2 may be generated as a result of a direct touch to the touchscreen panel 111. Because the operation mode set at time t4 is the glove touch mode, and because the amount of capacitance variation (or other information) is greater than the first threshold value T1 (which corresponds to the direct touch mode) the controller 170 may not process the signal A2 as a touch input. For example, the electronic device 100 may ignore the signal by performing no function or operation in response to the signal.

When the signal A2 continues to time t5 and the continuation time (t5 - t4) exceeds a preset value (e.g., 100 ms), the controller 170 may change the operation mode of the touch screen from the glove touch mode to the direct touch mode at time t6. In doing so, the controller may change the value of the threshold T to the first threshold value T1.

While the electronic device is operated in the direct touch mode, the controller 170 may recognize generation of a signal A3. The signal A3 may be generated as a result of a direct touch to the touchscreen panel 111. The processor 170, in this example, may process the signal A3 as valid touch input because amount of capacitance variation of A3 is greater than the value of the threshold T.

At time t7, the controller 170 may recognize generation of a signal C1. The signal C1 may be generated as a result of a cover touch. Since the amount of capacitance variation (or other information) indicated by the signal C1 is greater than the threshold T, the controller 170 may not process the signal C1 as touch input.

When the signal C1 continues until time t8, and the duration of the period (t8 - t7) exceeds a preset value (e.g., 100 ms), the controller 170 may change the operation mode of the touch screen from the direct touch mode to the cover touch mode at time t9. In doing so, the controller 170 may set the threshold T to a third threshold value T3 (e.g., 10 µF), which less than the first threshold value T1 and the second threshold value T2.

While the electronic device is operated in the cover touch mode, the controller 170 may recognize generation of the signal C2. The signal C2 may be generated as a result of a cover touch to the touchscreen panel 111. The controller 170 may process the signal C2 as touch input when the amount of capacitance variation indicated by the signal C2 is greater than the third threshold value T3.

At time t10, the controller 170 may recognize generation of signal B3. Because the signal B3 is greater than he second threshold value (which corresponds to the glove touch mode), and because the current operation mode of the electronic device is the cover touch mode, the controller 170 may not process the signal B3 as touch input.

When the signal B3 continues to time t11 and the duration of the period (t11 - t10) exceeds a preset value, the controller 170 may change the operation mode of the touch screen from the cover touch mode to the glove touch mode at time t12. While the electronic device is operated in the glove touch mode, the controller 170 may recognize generation of a signal B4 by the touchscreen panel 111. The signal B4 may be generated as a result of a glove touch to the touch screen pane 111. The controller 17 may process the signal B4 as touch input when the amount of capacitance variation of the B4 is greater than the second threshold value T2.

At time t13, the controller 170 may recognize generation of the signal S3. The signal C3 may be generated as a result of a cover touch. Since the amount of capacitance variation (or other information) indicated by the signal C3 is less than the threshold T, the controller 170 may not process the signal S3 as touch input.

When the signal S3 continues to time t14, and the duration of the period (t14 - t13) exceeds a preset value, the controller 170 may change the operation mode of the touch screen from the glove touch mode to the cover touch mode at time t15. In doing so, the controller 170 may set the threshold T to the third threshold value T3.

While the electronic device is operated in the cover touch mode, the controller 170 may recognize generation of a signal C4, and may process the signal C4 as touch input when the amount of capacitance variation indicated by the signal C4 is greater than the third threshold value T3.

At time t16, the controller 170 may recognize generation of a signal A4 by the touchscreen panel 111. The signal A4 may be generated as a result of a direct touch to the touchscreen panel 111. Because the amount of capacitance variation (or other information) indicated by the signal A4 is greater than the 1 threshold value T1 (which corresponds to the direct touch mode) and because the electronic device 100 is currently in the glove touch mode, the controller 170 may not process the signal A4 as touch input. When the signal A4 continues to time t17, and the duration of the period (t17 - t16) exceeds a preset value, the controller 170 may change the operation mode of the touch screen from the cover touch mode to the direct touch mode at time t18.

In this example, the signals Al-4, B1-3, and C1-4 are generated by the touchscreen panel 111, but in other examples they may be generated by the touch key 121 and/or any other suitable component that is touch-sensitive. Although in this example, the touchscreen components use capacitive technology, any other suitable type of component may be used. Although in this example, the threshold T is managed by a touchscreen panel controller, in other examples the threshold T may be managed by any other suitable component or combination of components. Although in this example, operations or functions in response to valid touch input are performed by an application processor, in other examples the operations or functions may be performed by any suitable component of the electronic device or and/or any suitable combination of components of the electronic device.

Although the aspect of FIG. 12 has described only a procedure of recognizing and processing the direct touch, the glove touch, and the cover touch, it is not limited thereto. For instance, the controller 170 may recognize generation of the cover glove touch. When such cover glove touch continues for a preset time, the controller 170 may set the operation mode of the touch screen to the cover glove touch mode. A preset value of the cover glove touch mode may be set to a fourth threshold value less than a third threshold value. If the cover glove touch occurs while the electronic device is operated in the cover glove touch mode, the controller 170 may process the cover glove touch as the touch input when the amount of capacitance variation of the generated cover glove touch is greater than the fourth threshold value.

Further, the controller 170 may recognize generation of hovering. For instance, when the amount of capacitance variation is detected greater than a fifth threshold value and less than the fourth threshold value, the controller 170 may recognize that hovering is generated on the touch screen and may execute a function corresponding to the hovering.

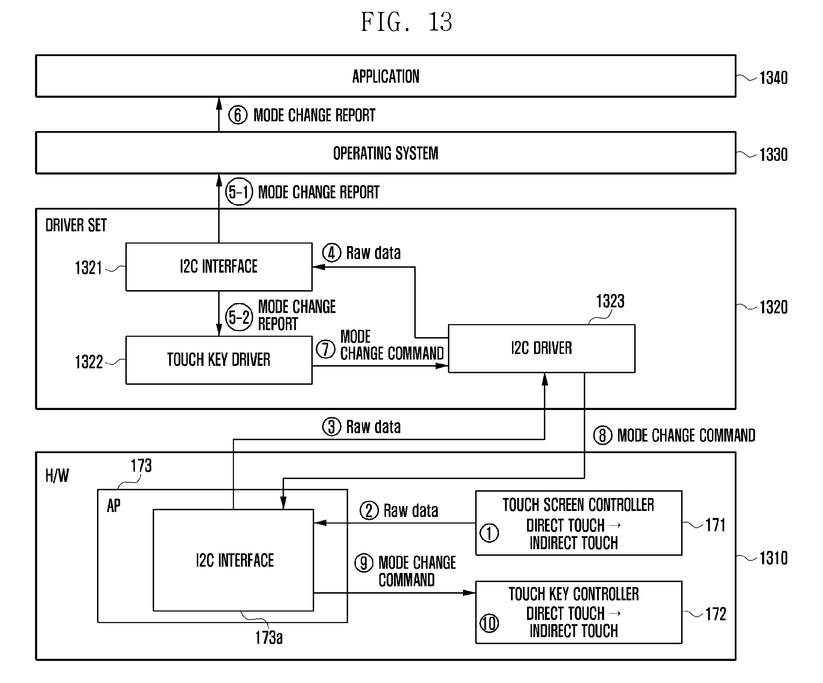

FIG. 13 is a diagram illustrating an example of a procedure for changing operation modes of the touch screen and the touch key in the electronic device according to an aspect of the present disclosure, while illustrating a schematic configuration of the electronic device. The electronic device 100 according to an aspect of the present disclosure may have a hierarchical structure as illustrated in FIG. 13.

Referring to FIG. 13, hardware 1310 may include a touch screen controller 171, a touch key controller 172, and an application processor 173. A driver set 1320 is provided on the hardware 1310. The driver set 1320 includes a touch screen panel (TSP) driver 1321, a touch key driver 1322, and an inter-integrated circuit (I2C) driver 1323. Each of the TSP driver 1321, the touch key driver 1322, and the I2C driver 1323 receives a command from an operating system 1330, and controls input and output of corresponding peripheral device in response to the command. The operating system 1330 is provided on the driver set 1320, and an application 1340 is provided on the operating system 1330.

A firmware to perform an operation for changing an operation mode of the touch screen may be embedded in an internal memory of the touch screen controller 171. Accordingly, at operation 1, when the indirect touch of the touch screen panel 111 is recognized, the touch screen controller 171 may change an operation mode of the touch screen from the direct touch mode to the indirect touch mode. Further, at operation 2, the touch screen controller 171 may transfer raw data including "information indicating that the operation mode of the touch screen is changed from the direct touch mode to the indirect touch mode" to the I2C interface 173a of the application processor 173. For instance, the raw data may include a switch value and a status value. When the operation mode of the touch screen is set to the direct touch mode, the switch value may be '0' and the status value may be '1'. When the operation mode of the touch screen is set to the indirect touch mode, the switch value may be '1' and the status value may be '6'. Meanwhile, the raw data may further include identification information, an x coordinate value, a y coordinate value, width information, and pressure information.

At operation 3, the I2C interface 173a transfers the raw data to the I2C driver 1323. At operation 4, the I2C driver 1323 transfers the raw data to the TSP driver 1321. Accordingly, at operation 5-1, the TSP driver 1321 transfers a mode change report message indicating that the operation mode of the touch screen is changed from the direct touch mode to the indirect touch mode to the operating system 1330. Further, at operation 5-2, the TSP driver 1321 transfers the mode change report message to the touch key driver 1322. Accordingly, at operation 6, the operating system 1330 may transfer the mode change report message to the application 1340.

At operation 7, the touch key driver 1322 transfers a mode change command message instructing to change the operation mode of a touch key from the direct touch mode to the indirect touch mode to the touch key driver 1322 in response to reception of the mode change report message. At operation 8, the I2C driver 1323 transfers a mode change command message to the I2C interface 173a. At operation 9, the I2C interface 173a transfers the mode change command message to the touch key controller 172. Accordingly, at operation 10, the touch key controller 172 changes the operation mode of the touch key from the direct touch mode to the indirect touch mode.

A procedure of changing operation modes of the touch screen and the touch key from the indirect touch mode to the direct touch mode may be performed by the same method as or by a method similar to FIG. 13.

The processes provided with respect to FIGS. 6-13 are provided as examples only. At least some of the operations in those processes may be performed in a different order, performed concurrently, or altogether omitted.

In some implementations, an electronic device may comprise a touch input unit configured to generate an electrical signal in response to touch or proximity of an at least partially electrically conductive external object; and a processor configured to determine that the touch or the proximity is valid when the electrical signal exceeds a first threshold value or when the electrical signal is equal to or greater than the first threshold value, wherein the processor is configure to monitor the electrical signal based at least partly on a second threshold value different from the first threshold value. The second threshold value may be less than the first threshold value. The processor may be configured to determine that the touch or the proximity is valid when the electrical signal exceeds or is equal to or greater than the second threshold value after the electrical signal is generated to be less than the first threshold value and greater than the second threshold value. The second threshold value may be greater than the first threshold value. The processor may be configured to determine that the touch or the proximity is valid when the electrical signal exceeds the second threshold value or when the electrical signal is equal to or greater than the second threshold value after the electrical signal is generated to be greater than the second threshold value. The processor may be configured to automatically change the first threshold value to the second threshold value based at least partly on the monitored result. The Touch input unit may comprise at least a part of a touch screen panel, and/or at least a part of a touch key. The proximity of the electrically conductive external object may comprise a state where a non-conductive object comes in contact with the touch input unit and the electrically conductive external object comes in contact with the non-conductive object. The proximity of the electrically conductive external object may comprise at least one of: a touch or proximity of a finger in glove; a touch or proximity of a finger in a state in which a touch input unit is closed by a cover; hovering of a finger; and hovering of a stylus pen. The processor may be configured to detect a hovering operation based at least partly on a third threshold value different from the first threshold value and the second threshold value.

In some implementations, a method for operating an electronic device including a touch input unit. The method may comprise generating an electrical signal in response to touch or proximity of an at least partially electrically conductive external object to the touch input unit; determining that the touch or the proximity is valid when the electrical signal exceeds a first threshold value or when the electrical signal is equal to or greater than the first threshold value; and monitoring the electrical signal based at least partly on a second threshold value different from the first threshold value. The method may further comprise changing the first threshold value to the second threshold value based at least partly on the monitored result. The second threshold value may be less than the first threshold value. The method may further comprise changing the first threshold value to the second threshold value after the monitored electrical signal is generated to be less than the first threshold value and greater than the second threshold value. The second threshold value may be greater than the first threshold value. The method may further comprise changing the first threshold value to the second threshold value after the monitored electrical signal is generated to be greater than the second threshold value. The proximity of the electrically conductive external object comprises at least one of: a touch or proximity of a finger in glove; a touch or proximity of a finger in a state in which a touch input unit is closed by a cover; hovering of a finger; and hovering of a stylus pen.

The above-described aspects of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

Although aspects of the present disclosure have been described in detail hereinabove, it should be clearly understood that many variations and modifications of the basic inventive concepts herein taught which may appear to those skilled in the present art will still fall within the spirit and scope of the present disclosure, as defined in the appended claims.

## Claims

1. A method for operating an electronic device including a touch screen panel, the method comprising:
recognizing an indirect touch based on detection information detected through the touch screen panel; and
setting a touch sensitivity of the touch screen panel corresponding to the indirect touch.

2. The method of claim 1, wherein the recognizing of the indirect touch comprises determining whether an amount of capacitance variation less than a direct touch value is detected for a preset time in a state in which a threshold value is set to the direct touch value, or determining whether a preset number of detection information having the amount of capacitance variation less than the direct touch value are continuously detected in a state in which the threshold value is set to the direct touch value, and
the setting of the touch sensitivity of the touch screen panel comprises setting the threshold value to an indirect touch value less than the direct touch value.

3. The method of claim 2, wherein the electronic device comprises a touch key, further comprising setting a touch sensitivity of the touch key corresponding to the indirect touch.

4. The method of claim 2, further comprising changing the threshold value to the direct touch value when an amount of capacitance variation greater than the direct touch value is detected in a state in which the threshold value is set to the indirect touch value.

5. The method of claim 4, wherein a preset value greater than the indirect touch value is equal to the direct touch value.

6. The method of claim 1, wherein the electronic device further comprises a processor, a touch screen controller, and a touch key controller, further comprising:
transferring information related to change of an operation mode of a touch screen to the processor by the touch screen controller;
transferring a mode change command message to the touch key controller by the processor; and
changing a touch sensitivity of a touch key by the touch key controller.

7. The method of claim 1, wherein the electronic device further comprises a cover to cover a touch screen and a sensor to detect a close of the cover,
further comprising:
recognizing the close of the cover based on detection information detected through the sensor; and
setting the touch sensitivity of the touch screen panel to a value corresponding to the close of the cover.

8. An electronic device comprising:
a touch screen panel configured to generate detection information in response to a touch on a touch screen;
a processor;
a touch screen controller configured to generate a touch event based on the detection information and to transfer the generated touch event to the processor; and
a touch management module configured to perform an operation of recognizing an indirect touch based on the detection information detected through the touch screen panel, and an operation of setting a touch sensitivity of the touch screen panel to a value corresponding to the indirect touch.

9. The electronic device of claim 8, wherein the touch screen controller further comprises a memory, and the touch management module is included in the memory.

10. The electronic device of claim 9, wherein the touch management module is configured to perform:
an operation to recognize that the indirect touch is occurred (1) when an amount of capacitance variation less than a direct touch value is detected for a preset time in a state in which a threshold value to determine occurrence of a touch is set to the direct touch value, or (2) when a preset number of detection information having the amount of capacitance variation less than the direct touch value are continuously detected in a state in which the threshold value is set to the direct touch value; and
an operation to set the threshold value to an indirect touch value less than the direct touch value.

11. The electronic device of claim 10, further comprising:
a touch key; and
a touch key controller configured to set a touch sensitivity of the touch key corresponding to the indirect touch.

12. The electronic device of claim 10, wherein the touch management module performs an operation of changing the threshold value to the direct touch value when an amount of capacitance variation greater than the direct touch value is detected in a state in which the threshold value is set to the indirect touch value.

13. The electronic device of claim 8, further comprising:
a touch key; and
a touch key controller configured to control the touch key,
wherein the touch screen controller transfers information related to change of an operation mode of the touch screen to a processor of the electronic device,
the processor transfers a mode change command message to the touch key controller, and
the touch key controller changes a touch sensitivity of the touch key.

14. The electronic device of claim 8, further comprising a sensor to detect a close of a cover,
wherein the touch management module performs an operation to recognize the close of the cover based on detection information detected through the sensor and an operation to set a touch sensitivity of the touch screen panel corresponding to the close of the cover.
